# EUROPEAN PATENT SPECIFICATION

(11) **EP 0 560 549 B1**
(45) Date of publication and mention of the grant of the patent: **28.07.1999**
(21) Application number: 93301721.2
(22) Date of filing: 08.03.1993
(51) Int. Cl.: H04N 5/232, G03B 17/20, G03B 13/12

(54) **Video camera having an optical zoom lens and an electronic zoom circuit**
Videokamera mit optischem Zoomobjektiv und elektronischer Zoomschaltung
Caméra vidéo avec un zoom optique et un zoom électronique

(30) Priority: 11.03.1992 JP 5202892
(43) Date of publication of application: 15.09.1993
(73) Proprietor: SONY CORPORATION, Tokyo 141 (JP)
(72) Inventor: Ishihama, Keiko, Shinagawa-ku, Tokyo 141 (JP); Fukuda, Tokuya, Shinagawa-ku, Tokyo 141 (JP); Senuma, Toshitaka, Shinagawa-ku, Tokyo 141 (JP); Shiono, Toru, Shinagawa-ku, Tokyo 141 (JP)
(74) Representative: Ayers, Martyn Lewis Stanley

(56) References cited:
- US-A- 4 478 493
- US-A- 4 843 475
- US-A- 4 843 475
- US-A- 5 097 279
- US-A- 5 161 025
- PATENT ABSTRACTS OF JAPAN vol. 12, no. 293 (E-645)10 August 1988 & JP-A-63 06 938 (FUJI PHOTO FILM CO LTD) 29 March 1988

## Description

The present invention relates to a video camera and more particularly to a video camera having an improved zoom system which is capable of definitively determining a zoomed portion of an image on a viewfinder.

Many video cameras have an optical zooming unit and an electronic zooming unit which serve for zooming an image to be recorded. The optical zooming unit has a predetermined maximum magnification capacity, for example usually up to three times magnification. By combining an optical zooming unit with an electronic zooming unit, the image can be zoomed to a higher magnification.

Some such video cameras have an electronic viewfinder. The electronic viewfinder receives a video signal from the electronic zooming system and indicates the same image as that zoomed by the electronic zooming unit on the basis of the transmitted video signal.

On the other hand, some video cameras have an optical viewfinder which indicates an image zoomed to a predetermined magnification rate, for example three times magnification. In the case of zooming up a portion of the image, the image including the zoomed portion and the peripheral remaining portion therearound appear in the viewfinder. However, the peripheral remaining portion of the image is not recorded on a recording medium such as a magnetic tape. Thus, the zoomed portion of the image can not be identified on the viewfinder and distinguished from the peripheral remaining portion.

US-A-5,161,025 describes a video camera with an optical viewfinder and an electronic viewfinder which can both be viewed simultaneously, if desired. The electronic viewfinder, in one mode can show a frame around the image in the optical viewfinder which can be adjusted for the zoom setting and also the parallax between the optical viewfinder and the electronic viewfinder.

US-A-5,097,279 describes a photographic camera for recording images on film which incorporates a motor driven optical zoom lens and also a feature for storing film trimming information for defining an area of the photographic image to be printed. Thus, if a magnification higher than that achievable by the optical zoom lens on the camera is desired, an apparent further magnification can be achieved by specifying a smaller area on the film, which when printed will appear to be enlarged. In order to display only the desired image in the viewfinder, a field frame is provided which is made smaller as the apparent magnification is increased.

US-A-4,843,475 describes a video camera which has both optical and electronic zoom facilities. The document describes the camera operating in one of two modes. A first mode where electronic zoom means are utilised when the optical zoom is set at the telephoto end of its range, i.e. at maximum magnification. Whereas with the second mode the electronic zoom is implemented first and when it reaches the limit of its magnification, the optical zoom means are then utilised.

US-4,478,493 describes a camera having a liquid crystal display (LCD) provided in the viewfinder. By colouring selected sections of the LCD, a frame can be provided to identify the image which is to be recorded which is clear in comparison to the coloured section which is not recorded.

There is a need to provide a video camera having an improved zooming system capable of definitively determining a zoomed portion of an image on a viewfinder.

An object of the present invention is to provide such a video camera.

According to the present invention there is provided a video camera comprising
a recording portion having:
optical means for focusing an image of a scene;
zoom-up means for magnifying the image focused by said optical means, said zoom-up means having a maximum magnification rate up to which the image is enlargeable;
pickup means for electronically picking up the image magnified by said zoom-up means, the video camera also comprising:
a recording medium on which the image from said recording portion is recorded;
a viewfinder disposed in parallel to said optical means and including a display panel on which the image is displayed; and
determing means for determining a partial area of said display panel on which the image to be recorded is to be displayed; characterised in that
said recording portion has a magnification rate which is at least equal to that of said zoom-up means; and
said viewfinder further comprises second zoom-up means having a maximum magnification rate which is less than said maximum magnification rate of said zoom-up means, and wherein said determining means divides said panel into two areas when the magnification rate of said recording portion is more than that of said second zoom-up means, said two areas including:
a clear image area in which the magnified image to be recorded is displayed;
a dull image area outside said clear image area on which the remaining portion of the image to be excluded from the recorded image is displayed.

The invention will be further described by way of non-limitative example with reference to the accompanying drawings, in which:-
Fig. 1 is a schematic block diagram of a preferred embodiment of a video camera according to the present invention;
Fig. 2 shows an image which is indicated on a display panel of a viewfinder used in the video camera of the invention; and
Fig. 3 shows an enlarged portion of the image of Fig. 2 which is surrounded by a frame.

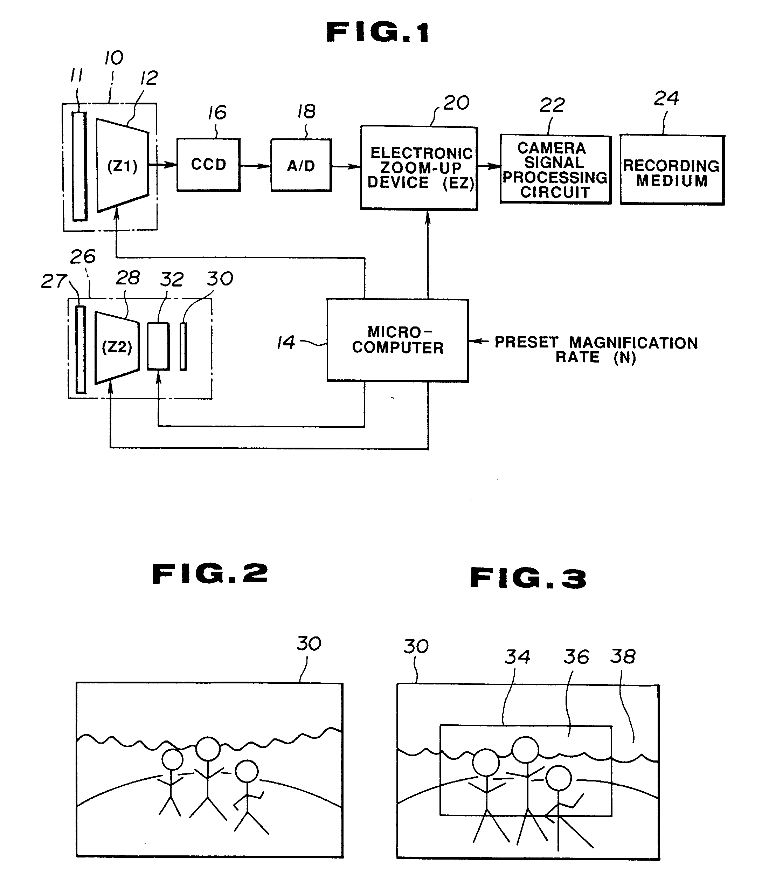

Referring now to Fig. 1, there is shown a video camera which has an optical lens unit 10 including a focusing lens assembly 11 for focusing an image of a scene and a zoom-up lens assembly 12 for zooming up the image. The zoom-up lens assembly 12 has a maximum magnification rate up to which the image received by the focusing lens assembly is enlargeable. The zoom-up lens assembly 12 is electrically connected to a microcomputer 14.

The microcomputer 14 is designed to provide a preset magnification rate "N" which is selected by a camera user. Based on the preset magnification rate "N", the microcomputer 14 transmits a zoom control signal to the zoom-up lens assembly 12 for varying the magnification rate thereof. The zoom-up lens assembly 12 variably magnifies the image focused by the focusing lens assembly at the magnification rate depending upon the zoom control signal transmitted from the microcomputer 14.

The magnified image is transferred to a charge coupled device (CCD) 16 or any other conventional electronic image sensing device. The charge coupled device 16 picks up the magnified image to transmit an analog format of an image data to an analog-to-digital converter 18. The analog-to-digital converter 18 converts the analog format of the image data to a digital format thereof which is transmitted to an image data memory (not shown) of an electronic zoom-up device 20.

To the electronic zoom-up device 20 is electrically connected the microcomputer 14 which transmits a zoom control signal for controlling the electronic zoom-up device 20. When the zoom control signal is received from the microcomputer 14, the electronic zoom-up device 20 is selectively operable or inoperable to magnify the digitalised image depending upon whether or not the present magnification rate "N" exceeds the maximum magnification rate "Z1" of the zoom-up lens assembly 12 in a manner described in detail below. The "inoperable" state of the electronic zoom-up device 20 means that the device 20 exhibits equi-magnifying capacity, namely one magnification rate (xl). The electronic zoom-up device 20 interpolates the digital format of the image data in response to receipt of the zoom control signal. Thus, the image data is electronically magnified at the magnification rate of the electronic zoom-up device 20.

The image data from the electronic zoom-up device 20 is transmitted to a camera signal processing circuit 22. The camera signal processing circuit 22 performs such a processing of the image data as white-level control. The image data processed is directed to a recording medium 24 for storage.

As seen in Fig. 1, an optical viewfinder 26 is disposed in the video camera in parallel to the optical lens unit 10. The optical viewfinder 26 includes a focusing lens assembly 27 for focusing an image of a scene and a zoom-up lens assembly 28 for zooming up the image passing through the focusing lens assembly. The zoom-up lens assembly 28 has a maximum magnification rate "Z2" up to which the image received by the focusing lens assembly is enlargeable. The maximum magnification rate "Z2" of the zoom-up lens assembly 28 is not more than the product of the maximum magnification rate "Z1" of the zoom-up lens assembly 12 of the optical lens unit 10 and the magnification rate of the electronic zoom-up means 20. The zoom-up lens assembly 28 is electrically connected to the microcomputer 14. The microcomputer 14 transmits a zoom control signal for varying the magnification rate of the zoom-up lens assembly 28. Thus, the image is magnified at the magnification rate of the zoom-up lens assembly 28 controlled by the microcomputer 14.

As shown in Fig. 1, the optical viewfinder 26 also includes a display panel 30 and a liquid crystal device 32 disposed between the display panel 30 and the zoom-up lens assembly 28. The liquid crystal device 32 is electrically connected to the microcomputer 14. The microcomputer 14 transmits a drive signal for driving the liquid crystal device 32 depending upon the zoom control signal transmitted to the zoom-up lens assembly 28.

Based on the preset magnification rate "N", the microcomputer 14 controls the zoom-up assembly 12, the electronic zoom-up device 20, the zoom-up assembly 28 and the liquid crystal device 32 in such a manner as described hereinafter.

When the preset magnification rate "N" at the microcomputer 14 is not more than the maximum magnification rate "Z1" of the zoom-up lens assembly 12, the microcomputer 14 controls the zoom-up lens assembly 12 so as to zoom up the image at "N" magnification rate and controls the electronic zoom-up device 20 so as to be inoperable in its magnifying function. As a result, the image zoomed up in "N" magnification is transferred via the camera signal processing circuit 22 to the recording medium 24.

At the same time, the microcomputer 14 controls the zoom-up lens assembly 28 of the viewfinder 26 so as to zoom up the image of the scene at "N" magnification rate and activates the liquid crystal device 32 so as to be transparent. The image passes through the transparent liquid crystal device 32 to be indicated on the display panel 30 as seen in Fig. 2.

On the other hand, when the preset magnification rate "N" at the microcomputer 14 is more than the maximum magnification rate "Z1" of the zoom-up lens assembly 12, the microcomputer 14 controls the zoom- up lens assembly 12 up to the maximum magnification rate "Z1". Then, the microcomputer 14 transmits the zoom control signal to operate the electronic zoom-up device 20 so as to magnify the image at a magnification rate "EZ" of the electronic zoom-up device 20. The magnification rate "EZ" of the electronic zoom-up device 20 is obtained by dividing the preset magnification rate "N" at the microcomputer 14 by the maximum magnification rate "Z1" of the zoom-up lens assembly 12. Namely, the magnification rate "EZ" is represented by a magnification rate "N/Z1". The image magnified is transferred via the camera signal processing circuit 22 to the recording medium 24.

At the same time, in such a condition that the preset magnification rate "N" is more than the maximum magnification rate "Z1", the microcomputer 14 controls the zoom-up lens assembly 28 of the viewfinder 26 so as to magnify the image of the scene at the maximum magnification rate "Z2" and activates the liquid crystal device 32 so as to form an opaque frame-like line thereon. Furthermore, the liquid crystal device 32 operates to provide an inside transparent zone and an outside translucent zone both formed inside and outside of the opaque frame-like line. The opaque frame-like line and both zones of the liquid crystal device 32 are projected on the display panel 30. The opaque frame-like line projected on the display panel 30 acts as a rectangular frame 34 surrounding a portion 36 of the image projected through the inside transparent zone of the liquid crystal device 32 on the display panel 30, as seen in Fig. 3. The portion 36 of the image surrounded by the frame 34 corresponds to the zoomed image to be recorded on the recording medium 24. Accordingly, the rectangular frame 34 on the display panel 30 serves for dividing a whole area of the display panel 30 into a clear image area 36 thereinside on which the zoomed portion of the image to be recorded is displayed, and a dull image area 38 thereoutside on which the remaining portion of the image to be excluded from the recorded image. The image on the clear image area 36 is actually enlarged at a magnification rate equal to the magnification rate "EZ" of the electronic zoom-up device 20 when it is recorded on the recording medium 24.

One of the zoom-up lens assembly 12 and the electronic zoom-up device 20 may be dispensable.

In such a case where the video camera dispenses with the electronic zoom-up device 20, the maximum magnification rate "Z1" of the zoom-up lens assembly 12 is more than that "Z2" of the zoom-up lens assembly 28.

Therefore, the respective magnification capacity of the zoom-up lens assemblies 12 and 28 and the electronic zoom-up device 20 may be desirably selected according to various requirements.

## Claims

1. A video camera comprising
a recording portion having:
optical means (11) for focusing an image of a scene;
zoom-up means (12) for magnifying the image focused by said optical means (11), said zoom-up means (12) having a maximum magnification rate up to which the image is enlargeable;
pickup means (16) for electronically picking up the image magnified by said zoom-up means, the video camera also comprising:
a recording medium (24) on which the image from said recording portion is recorded;
a viewfinder (26) disposed in parallel to said optical means (11) and including a display panel (30) on which the image is displayed; and
determing means (34) for determining a partial area (36) of said display panel on which the image to be recorded is to be displayed; characterised in that
said recording portion has a magnification rate which is at least equal to that of said zoom-up means; and
said viewfinder further comprises second zoom-up means (28) having a maximum magnification rate which is less than said maximum magnification rate of said zoom-up means, and wherein said determining means (34) divides said panel (30) into two areas (36, 38) when the magnification rate of said recording portion is more than that of said second zoom-up means (28), said two areas including:
a clear image area (36) in which the magnified image to be recorded is displayed;
a dull image area (38) outside said clear image area on which the remaining portion of the image to be excluded from the recorded image is displayed.

2. A video camera as claimed in claim 1, wherein said determining means includes a liquid crystal device (32).

3. A video camera as claimed in claim 2, wherein said determining means is provided in the form of a frame (34) displayed on said panel (30) and surrounding said partial area (36) of said panel (30), said frame is variable in size in response to the magnification rate of said zoom-up means (12) and that of said recording portion.

4. A video camera as claimed in claim 3, further comprising first control means (14) for varying a magnification rate of said zoom-up means (12) and second control means (14) for controlling the size of said frame (34).

5. A video camera as claimed in claim 4, wherein said first and second control means are incorporated into one microcomputer (14).

6. A video camera as claimed in claim 5, further comprising third control means (14) for varying a magnification rate of said second zoom-up means (28).

7. A video camera as claimed in claim 6, wherein said third control means is incorporated into said one microcomputer (14).

8. A video camera according to any one of claims 1, 2 or 3, said recording portion further comprising:
electronic zoom-up means (20) for electronically magnifying the image picked up by said pickup means (16), such that said magnification rate of said recording means equals the product of that of said zoom-up means and that of said electronic zoom-up means.

9. A video camera as claimed in claim 8, wherein said electronic zoom-up means (20) activates when the required magnification rate of said recording portion is more than a maximum magnification rate of said zoom-up means (12).

10. A video camera as claimed in claim 8 or 9 further comprising first control means (14) for varying the magnification rate of said zoom-up means (12), second control means (14) for varying a magnification rate of said electronic zoom-up means (20) and third control means (14) for controlling the size of said frame (34).

11. A video camera as claimed in claim 10, wherein said first, second and third control means are incorporated into one microcomputer (14).

12. A video camera as claimed in claim 11 further comprising fourth control means (14) for varying a magnification rate of said second zoom-up means.

13. A video camera as claimed in claim 12, wherein said fourth control means (14) is incorporated into said one microcomputer (14).

14. A video camera as claimed in any of the preceding claims wherein, said viewfinder (26) is an optical viewfinder.

## Patentansprüche

1. Videokamera, die
einen Aufzeichnungsteil umfaßt, der enthält:
ein optisches Mittel (11) zum Fokussieren eines Bildes einer Szene,
ein Vergrößerungs-Brennweitenänderungsmittel (Zoom-up-Mittel (12) zum Vergrößern des Bildes, das durch das optische Mittel (11) fokussiert ist, wobei das Vergrößerungs-Brennweitenänderungsmittel (12) ein maximales Vergrößerungsmaß hat, bis zu dem das Bild vergrößerbar ist,
ein Aufnahmemittel (16) zum elektronischen Aufnehmen des Bildes, das durch das Vergrößerungs-Brennweitenänderungsmittel vergrößert ist,
welche Videokamera außerdem umfaßt:
ein Aufzeichnungsmedium (24), auf dem das Bild aus dem Aufzeichnungsteil aufgezeichnet wird,
einen Sucher (26), der parallel zu dem optischen Mittel (11) angeordnet ist und ein Anzeigefeld (30) enthält, auf welchem das Bild angezeigt wird, und
ein Bestimmungsmittel (34) zum Bestimmen eines Teilbereichs (36) des Anzeigefeldes, in welchem das aufzuzeichnende Bild anzuzeigen ist,
dadurch **gekennzeichnet**, daß
der Aufzeichnungsteil ein Vergrößerungsmaß hat, das zumindest gleich demjenigen des Vergrößerungs-Brennweitenänderungsmittels ist, und
der Sucher ferner ein zweites Vergrößerungs-Brennweitenänderungsmittel (28) umfaßt, das ein maximales Vergrößerungsmaß hat, welches kleiner als das maximale Vergrößerungsmaß des Vergrößerungs-Brennweitenänderungsmittels ist, und wobei das Bestimmungsmittel (34) das Anzeigefeld (30) in zwei Bereiche (36, 38) unterteilt, wenn das Vergrößerungsmaß des Aufzeichnungsteils größer als dasjenige des zweiten Vergrößerungs-Brennweitenänderungsmittels (28) ist, welche zwei Bereiche enthalten:
einen Klarbild-Bereich (36), in dem das aufzuzeichnende vergrößerte Bild angezeigt wird,
einen Kontrastlosbild-Bereich (38) außerhalb des Klarbild-Bereichs, in dem der verbleibende Teile des Bildes, der aus dem aufgezeichneten Bild auszuschließen ist, angezeigt wird.

2. Videokamera nach Anspruch 1, bei der das Bestimmungsmittel eine Flüssigkristalleinrichtung (32) enthält.

3. Videokamera nach Anspruch 2, bei der das Bestimmungsmittel in Form eines Rahmens (34) vorgesehen ist, der auf dem Anzeigefeld (30) angezeigt wird und den Teilbereich (36) des Anzeigefeldes (30) umgibt, welcher Rahmen in Reaktion auf das Vergrößerungsmaß des Vergrößerungs-Brennweitenänderungsmittels (12) und dasjenige des Aufzeichnungsteils in der Größe veränderbar ist.

4. Videokamera nach Anspruch 3, die ferner ein erstes Steuermittel (14) zum Ändern eines Vergrößerungsmaßes des Vergrößerungs-Brennweitenänderungsmittels (12) und ein zweites Steuermittel (14) zum Steuern der Größe des Rahmens (34) umfaßt.

5. Videokamera nach Anspruch 4, bei der das erste und das zweite Steuermittel in einen Mikrocomputer (14) eingebaut sind.

6. Videokamera nach Anspruch 5, die ferner ein drittes Steuermittel (14) zum Ändern eines Vergrößerungsmaßes des zweiten Vergrößerungs-Brennweitenänderungsmittels (28) umfaßt.

7. Videokamera nach Anspruch 6, bei der das dritte Steuermittel in den einen Mikrocomputer (14) eingebaut ist.

8. Videokamera nach einem der Ansprüche 1, 2 oder 3, wobei der Aufzeichnungsteil ferner umfaßt:
ein elektronisches Vergrößerungs-Brennweitenänderungsmittel (20) zum elektronischen Vergrößern des Bildes, das durch das Aufnahmemittel (16) aufgenommen ist, derart, daß das Vergrößerungsmaß des Aufzeichnungsmittels gleich dem Produkt desjenigen des Vergrößerungs-Brennweitenänderungsmittels und desjenigen des elektronischen Vergrößerungs-Brennweitenänderungsmittels ist.

9. Videokamera nach Anspruch 8, bei der das elektronische Vergrößerungs-Brennweitenänderungsmittel (20) aktiv wird, wenn das erforderliche Vergrößerungsmaß des Aufzeichnungsteils größer als ein maximales Vergrößerungsmaß des Vergrößerungs-Brennweitenänderungsmittels (12) ist.

10. Videokamera nach Anspruch 8 oder 9, die ferner umfaßt:
ein erstes Steuermittel (14) zum Ändern des Vergrösserungsmaßes des Vergrößerungs-Brennweitenänderungsmittels (12),
ein zweites Steuermittel (14) zum Ändern eines Vergrößerungsmaßes des elektronischen Vergrößerungs-Brennweitenänderungsmittels (20) und
ein drittes Steuermittel (14) zum Steuern der Größe des Rahmens (34).

11. Videokamera nach Anspruch 10, bei der das erste, das zweite und das dritte Steuermittel in einen Mikrocomputer (14) eingebaut sind.

12. Videokamera nach Anspruch 11, die ferner ein viertes Steuermittel (14) zum Ändern eines Vergrößerungsmaßes des zweiten Vergrößerungs-Brennweitenänderungsmittels umfaßt.

13. Videokamera nach Anspruch 12, bei der das vierte Steuermittel (14) in den einen Mikrocomputer (14) eingebaut ist.

14. Videokamera nach einem der vorhergehenden Ansprüche, bei der der Sucher (26) ein optischer Sucher ist.

## Revendications

1. Caméra vidéo comprenant
une partie d'enregistrement comprenant :
des moyens optiques (11) pour régler la netteté d'une image d'une scène ;
des moyens de zoom (12) pour grossir l'image sur laquelle lesdits moyens optiques (11) sont focalisés, lesdits moyens de zoom (12) ayant un taux de grossissement maximal auquel l'image peut être agrandie ;
des moyens de détection (16) pour détecter électroniquement l'image grossie par lesdits moyens de zoom, la caméra vidéo comprenant également :
un support d'enregistrement (24) sur lequel l'image provenant de ladite partie d'enregistrement est enregistrée ;
un viseur (26) disposé en parallèle auxdits moyens optiques (11) et comprenant un panneau d'affichage (30) sur lequel l'image est affichée ; et
des moyens de détermination (34) pour déterminer une zone partielle (36) dudit panneau d'affichage sur laquelle l'image à enregistrer doit être affichée ;
caractérisée en ce que
ladite partie d'enregistrement a un taux de grossissement qui est au moins égal à celui desdits moyens de zoom ; et
ledit viseur comprend, de plus, des seconds moyens de zoom (28) ayant un taux de grossissement maximal qui est inférieur audit taux de grossissement maximal desdits moyens de grossissement, et dans laquelle lesdits moyens de détermination (34) divisent ledit panneau (30) en deux zones (36, 38) lorsque le taux de grossissement de ladite partie d'enregistrement est supérieur à celui desdits seconds moyens de zoom (28), lesdites deux zones comprenant :
une zone d'image nette (36) dans laquelle l'image grossie qui doit être enregistrée est affichée ;
une zone d'image à faible contraste (38) à l'extérieur de ladite zone d'image nette sur laquelle la partie restante de l'image à exclure de l'image enregistrée est affichée.

2. Caméra vidéo selon la revendication 1, dans laquelle lesdits moyens de détermination comprennent un dispositif à cristaux liquides (32).

3. Caméra vidéo selon la revendication 2, dans laquelle lesdits moyens de détermination sont prévus sous la forme d'un cadre (34) affiché sur ledit panneau (30) et entourant ladite zone partielle (36) dudit panneau (30), la taille dudit cadre est susceptible de varier en fonction du taux de grossissement desdits moyens de zoom (12) et de celui de ladite partie d'enregistrement.

4. Caméra vidéo selon la revendication 3, comprenant, de plus, des premiers moyens de commande (14) pour modifier un taux de grossissement desdits moyens de zoom (12) et des seconds moyens de commande (14) pour commander la taille dudit cadre (34).

5. Caméra vidéo selon la revendication 4, dans laquelle lesdits premiers et seconds moyens de commande sont incorporés dans un micro-ordinateur (14).

6. Caméra vidéo selon la revendication 5, comprenant, de plus, des troisièmes moyens de commande (14) pour modifier un taux de grossissement desdits seconds moyens de zoom (28).

7. Caméra vidéo selon la revendication 6, dans laquelle lesdits troisièmes moyens de commande sont incorporés dans le susdit micro-ordinateur (14).

8. Caméra vidéo selon l'une quelconque des revendications 1, 2 ou 3, ladite partie d'enregistrement comprenant, de plus :
des moyens de zoom électroniques (20) pour grossir électroniquement l'image détectée par lesdits moyens de détection (16), de sorte que ledit taux de grossissement desdits moyens d'enregistrement soit égal au produit de celui desdits moyens de zoom et de celui desdits moyens de zoom électroniques.

9. Caméra vidéo selon la revendication 8, dans laquelle lesdits moyens de zoom électroniques (20) sont activés lorsque le taux de grossissement requis de ladite partie d'enregistrement est supérieur à un taux de grossissement maximal desdits moyens de zoom (12).

10. Caméra vidéo selon la revendication 8 ou 9, comprenant, de plus, des premiers moyens de commande (14) pour modifier le taux de grossissement desdits moyens de zoom (12), des seconds moyens de commande (14) pour modifier un taux de grossissement desdits moyens de zoom électroniques (20) et des troisièmes moyens de commande (14) pour commander la taille dudit cadre (34).

11. Caméra vidéo selon la revendication 10, dans laquelle lesdits premiers, seconds et troisièmes moyens de commande sont incorporés dans un micro-ordinateur (14).

12. Caméra vidéo selon la revendication 11, comprenant, de plus, des quatrièmes moyens de commande (14) pour modifier un taux de grossissement desdits seconds moyens de zoom.

13. Caméra vidéo selon la revendication 12, dans laquelle lesdits quatrièmes moyens de commande (14) sont incorporés dans le susdit micro-ordinateur (14).

14. Caméra vidéo selon l'une quelconque des revendications précédentes, dans laquelle ledit viseur (26) est un viseur optique.
